# EUROPÄISCHE PATENTSCHRIFT

(11) **EP 3 774 304 B1**
(45) Veröffentlichungstag und Bekanntmachung des Hinweises auf die Patenterteilung: **07.06.2023**
(21) Anmeldenummer: 19711584.3
(22) Anmeldetag: 15.03.2019
(51) Int. Cl.: B29C 70/22, B29C 70/24, B29C 70/52, B29C 70/20

(54) **VERFAHREN ZUR HERSTELLUNG EINES THERMOPLASTISCHEN STRANGPROFILS**
METHOD FOR PRODUCING A THERMOPLASTIC EXTRUDED PROFILE
PROCÉDÉ DE PRODUCTION D'UN PROFILÉ EXTRUDÉ THERMOPLASTIQUE

(30) Priorität: 13.04.2018 DE 102018108804
(43) Veröffentlichungstag der Anmeldung: 17.02.2021
(73) Patentinhaber: REHAU Industries SE & Co. KG, 95111 Rehau (DE)
(72) Erfinder: AL-SHEYYAB, Ahmad, 95111 Rehau (DE)
(86) Internationale Anmeldenummer: PCT/EP2019/056554
(87) Internationale Veröffentlichungsnummer: WO 2019/197112

(56) Entgegenhaltungen:
- EP-A1- 0 752 306
- WO-A1-2018/072878
- DE-A1-102015 113 302
- Vishal D Kamble: "Optimization of thermoplastic pultrusion process using commingled fibers", , 1. Januar 2008 (2008-01-01), XP055597856, Gefunden im Internet: URL:https://pdfs.semanticscholar.org/c81d/ daed115264fb8f7cd4384522bdbe0eb32f25.pdf [gefunden am 2019-06-19]
- LUISIER A ET AL: "Reaction injection pultrusion of PA12 composites: process and modelling", COMPOSITES PART A: APPLIED SCIENCE AND MANUFACTURING, ELSEVIER, AMSTERDAM, NL, Bd. 34, Nr. 7, 1. Juli 2003 (2003-07-01), Seiten 583-595, XP004428285, ISSN: 1359-835X, DOI: 10.1016/S1359-835X(03)00101-5

## Beschreibung

Die Erfindung betrifft ein Verfahren zur Herstellung eines thermoplastischen Strangprofils mit einer Querschnittsfläche von maximal 20 cm², vorzugsweise maximal 10 cm²
- wobei das Strangprofil (1) mit Hilfe eines Strangproduktionsprozesses (3) hergestellt wird, und
- wobei während des Strangproduktionsprozesses (3) in die thermoplastische Matrix (4) des Strangprofils (1) endlose Verstärkungsfasern (5) integriert werden.

Bei dem thermoplastischen Strangprofil handelt es sich erfindungsgemäß um ein Betonbauteil-Bewehrungselement. Derartige Bewehrungselemente sind im Bauwesen weit verbreitet. Beton besitzt gegenüber Zugkräften nur eine sehr geringe Widerstandskraft. Es ist im Stand der Technik daher üblich, Beton mit Stahl oder auch textilen Strukturen zur Erhöhung der Zugfestigkeit zu armieren. Sofern Stahl zum Einsatz kommt, spricht man dann von Stahlbeton und beim Einsatz von textilen Materialien von Textilbeton.

Metallstäbe zu Bewehrung von Beton haben grundsätzlich den Nachteil, dass sie, beispielsweise aufgrund äußerer Witterungseinflüsse, im Laufe der Zeit korrodieren und damit ihre festigkeitssteigernde Wirkung verlieren können. Darüber hinaus können die magnetischen Eigenschaften von Metallen nachteilig sein. Überdies besitzt Stahl eine hohe Dichte, so dass die Stahlarmierung des Betons aufgrund ihres hohen Gewichtes zu einer zusätzlichen mechanischen Belastung des entsprechend bewehrten Betonbauteils führt.

Es ist daher im Stand der Technik bereits versucht worden, den Stahl durch andere Materialien, beispielsweise durch Kunststoff, zu ersetzen. So ist beispielsweise in der DE 100 63 461 A1 der Ansatz beschrieben, Beton durch eine direkte Integration von Verstärkungsfäden aus Glas oder Kunststoff zu armieren. Die hiermit erzielbaren Verbesserungen der mechanischen Belastbarkeit des Betons sind jedoch begrenzt.

Aus der DE 103 10 896 A1 ist es bekannt, zur Bewehrung von Beton ein glasfaserverstärktes Kunststoffprofil einzusetzen, bei dem als Kunststoff ein Duroplast eingesetzt wird. Duroplaste haben nun jedoch grundsätzlich den Nachteil, dass die damit hergestellten Bauteile nach deren Herstellung nicht mehr umformbar sind und damit schon unmittelbar bei der Herstellung die finale Form der entsprechenden Armierungselemente festgelegt werden muss. Weitere Nachteile sind die aufgrund des vergleichsweise langsamen Aushärtungsprozesses bei Duroplasten limitierten Fertigungsgeschwindigkeiten sowie das schwierige Recycling von Duroplastmaterialien. Die DE 10 2015 113 302 A1 offenbart ein Verfahren mit den eingangs genannten Merkmalen und beschreibt die Herstellung von Betonbauteil-Bewehrungselementen mit armierten thermoplastischen Materialien, welche umformbar und mittels eines Strangpressverfahrens herstellbar sind. Die aus dieser Schrift bekannten Elemente besitzen viele positive Eigenschaften; die Performance ist jedoch immer noch verbesserungsfähig.

Vishal D. Kamble: "Optimization of thermoplastic pultrusion process using commingled fibers", 1. Januar 2008 (2008-01-01), XP055597856, gibt einen Überblick über verschiedene Verfahren zur Herstellung von endlos faserverstärkten Kunststoffprofilen. In EP 0 752 306 A1 sowie auch in LUISIER A ET AL: "Reaction injection pultrusion of PA12 composites: process and modelling", COMPOSITES PART A: APPLIED SCIENCE AND MANUFAC-TURING, ELSEVIER, AMSTERDAM, NL, Bd. 34, Nr. 7, 1. Juli 2003 (2003-07-01), Seiten 583-595, XP004428285, ISSN: 1359-835X, DOI: 10.1016 / S1359-835X(03)00101-5 sind Verfahren zur Herstellung eines faserverstärkten Profils mittels reaktiver Pultrusion beschrieben.

Der Erfindung liegt die Aufgabe zugrunde, ein Verfahren zur Herstellung eines thermoplastischen Strangprofils in Form eines Betonbauteil-Bewehrungselementes anzugeben, welches kostengünstig mit hoher Produktionsgeschwindigkeit durchführbar ist, eine signifikante mechanischen Verstärkung des Strangprofils ermöglicht und gleichzeitig eine geringe Korrosionsanfälligkeit des Profils gewährleistet.

Diese Aufgabe wird mit den Merkmalen des Patentanspruchs 1 gelöst. Erfindungsgemäß wird also zur Herstellung des thermoplastischen Strangprofils ein Pultrusionsverfahren eingesetzt, bei dem endlose Faserstränge, welche während der Verfahrens in eine Polymermatrix eingebettet werden, aus dem Werkzeug herausgezogen werden. Derartige Pultrusionsverfahren sind im Stand der Technik bei der Herstellung von Duroplast-Profilen bekannt. Die Einsatzstoffe zur Herstellung von Duroplasten sind dünnflüssig und können daher im Wege eines Pultrusionsverfahrens gut verarbeitet werden. Aufgrund ihrer hohen Zähigkeit sind hingegen viele thermoplastische Materialien, welche aufgrund ihrer nachträglichen Bearbeitungsmöglichkeiten (schweißbar, plastisch verformbar etc.) und ihrer Eigenschaften (Zähigkeit, Recyclingfähigkeit etc.) wesentliche Vorteile gegenüber Duroplasten bieten, für eine Pultrusion eher ungeeignet. Im Rahmen der Erfindung wird nun jedoch die chemische Herstellung des Thermoplasten erst im eigentlichen Pultrusionsprozess durch die Zufuhr entsprechender Monomere durchgeführt, also in Form einer reaktiven Pultrusion. Zweckmäßigerweise wird die thermoplastische Matrix des Kernprofils hierbei aus dünnflüssigen, für die Verarbeitung in einer Pultrusion geeigneten Monomeren und/oder reaktiven Oligomeren hergestellt, die während der reaktiven Pultrusion zum Thermoplast polymerisiert werden. Die niederviskosen Eigenschaften der Monomere bw. Oligomeren erlauben somit eine sehr umfassende Benetzung der Verstärkungsfasern während Pultrusion und damit eine sehr innige Einbettung der Verstärkungsfasern in die thermoplastische Matrix des fertig hergestellten Strangprofils, wodurch die mechanische Performance des Profils deutlich gesteigert werden kann. Zweckmäßigerweise sind die Oligomere jeweils aus 2 bis 100, z.B. 5 bis 50 Monomeren zusammengesetzt. Bei Bedarf können der reaktiven Pultrusion Zusatzstoffe, z.B. Initiatoren, beispielsweise in Form von Peroxiden oder anderen Radikale bildenden Verbindungen, und/oder Katalysatoren und/oder Aktivatoren, wie z.B. Stabilisatoren und/oder Schlagzäh-Modifier, zugegeben werden. Je nach herzustellendem Thermoplast sind der reaktiven Pultrusion zwei oder mehr verschiedene Monomere und/oder reaktive Oligomere zuzuführen (Bsp. Polyester). Im Rahmen der Erfindung liegt es aber auch, dass zur Polymerisation lediglich ein Monomer bzw. sich lediglich durch die Kettenlänge unterscheidende Oligomere eingesetzt werden (Bsp. PMMA). Die reaktive Pultrusion erlaubt insgesamt einen sehr hohen Faseranteil im Kernprofil, beispielsweise mehr als 60 Gew.-%, insbesondere mehr als 80 Gew.-% Faseranteil, so dass aufgrund dieses hohen Anteils an Endlosfasern eine beträchtliche Erhöhung der mechanischen Stabilität erzielt werden kann, welche beispielsweise um ein Mehrfaches höher ist als bei unverstärkten Thermoplast-Profilen. Die endlosen Verstärkungsfasern bestehen vorzugsweise aus Glas und/oder Kohlenstoff und/oder Basalt und/oder Naturfasern (z.B. Bambus, Flachs) und/oder Kunststoff, z.B. Aramid.

Ferner können die Verstärkungsfasern können unidirektional in Strangrichtung des Strangprofils verlaufen. Im Rahmen der Erfindung liegt es ferner, dass die Verstärkungsfasern in Hybrid-Rovings zusammengefasst sind, die Verstärkungsfasern aus mindestens zwei unterschiedlichen (z.B. den vorgenannten) Materialien enthalten. Die vorzugsweise kreisförmige Querschnittsfläche des Strangprofils beträgt zweckmäßigerweise mindestens 0,3 cm². Das kontinuierlich hergestellte Strangprofil wird zweckmäßigerweise abgelängt (beispielsweise mit einer Schneidvorrichtung), z.B. in stangenförmige Strangprofile mit einer Länge von mindestens 10 cm.

Zweckmäßigerweise wird die thermoplastische Matrix des Kernprofils als Polyamid(PA)-Matrix oder Polyacrylat-Matrix, insbesondere PMMA-Matrix, ausgebildet. In diesem Fall werden der reaktiven Pultrusion die entsprechenden Monomere und/oder reaktiven Oligomere zur Herstellung von PA, insbesondere PA 6 oder PA 12, bzw. Polyacrylat, insbesondere PMMA zugeführt. Die Herstellung anderer Materialien während der reaktiven Pultrusion, beispielsweise von Polyester, z.B. Polyethylenterephthalat (PET), insbesondere schlagzähem Polyethylenterephthalat (PET-G), oder Polybutylenterephthalat (PBT), oder thermoplastischen Polyurethanen (TPU) wird hierdurch jedoch nicht ausgeschlossen. Die Herstellung von Bisphenol A (BPA), Polycarbonat (PC), Polyesteramiden oder Polyimiden mittels der reaktiven Pultrusion liegt hier ebenfalls im Rahmen der Erfindung.

Erfindungsgemäß wird das Kernprofil mit einer äußern Beschichtung versehen. Die äußere Beschichtung hat zweckmäßigerweise eine Schichtdicke von maximal 5 mm, z.B. maximal 2 mm. Die Schichtdicke kann ferner mindestens 0,1 mm, z.B. mindestens 0,5 mm, beispielsweise mindestens 1 mm betragen. Zweckmäßigerweise ist die Beschichtung vollflächig oder aber auch lediglich bereichsweise auf die äußere Oberfläche des Kernprofils aufgetragen. Eine vollflächige Auftragung meint, dass die Beschichtung das Kernprofil lückenlos umschließt. Dies kann z.B. zweckmäßig sein, sofern die gesamte äußere Oberfläche des Strangprofils eine hohe Oberflächengüte aufweisen muss. Vorzugsweise bedeckt die Beschichtung mindestens 70 %, z.B. mindestens 80 %, vorzugsweise mindestens 90 % der äußeren Oberfläche des Kernprofils. Im Rahmen der Erfindung liegt es aber auch, dass bewusst nur ein Teil der Oberfläche des Kernprofils mit der Beschichtung bedeckt wird, z.B. maximal 50 %, insbesondere maximal 30 %. Dies kann z.B. dann der Fall sein, wenn die Beschichtung als Funktionsträger ausgebildet werden soll, also z.B. mindestens ein Funktionselement aufweisen soll. Hierauf wird später noch näher eingegangen.

Zweckmäßigerweise wird die Beschichtung aus einem auf dem Kernprofil haftenden Polymer hergestellt, welches vorzugsweise dem Material der thermoplastischen Matrix des Kernprofils entspricht. So wird beispielsweise bei der Ausbildung der thermoplastischen Matrix des Kernprofils als PA-Matrix zweckmäßigerweise die Beschichtung ebenfalls aus PA hergestellt oder bei einer PMMA-Matrix des Kernprofils die Beschichtung auch aus PMMA. Grundsätzlich kommen für die Beschichtung dieselben Materialien wie für die Thermoplast-Matrix des Kernprofils infrage, also neben Polyacrylat (z.B. PMMA) oder PA (z.B. PA6 oder PA12) insbesondere Polyester (z.B. PET, PET-G oder PBT), Polyurethane (z.B. TPU), BPA oder PC. Im Rahmen der Erfindung liegt es auch, dass die Beschichtung aus Polyvinylchlorid (PVC), Styrene-Acrylonitrilen (SAN), Acrylnitil-Styrol-Acrylester (ASA), Polyesteramiden oder Polyimiden hergestellt werden. Zweckmäßigerweise besteht die Beschichtung aus einem nicht faserverstärkten Material. Im Rahmen der Erfindung liegt es insbesondere, dass die äußere Beschichtung mit dem Kernprofil coextrudiert wird. Der Begriff Coextrusion meint in diesem Zusammenhang auch den Auftrag der Beschichtung auf das frisch hergestellte Kernprofil mittels einer unmittelbar an die reaktive Pultrusion online anschließenden Extrusion, wobei in diesem Fall auch die Zwischenkühlung des Kernprofils vor dem Auftrag der Beschichtung im Rahmen der Erfindung liegt. Alternativ hierzu können bei der Coextrusion das Kernprofil und die Beschichtung in einem gemeinsamen Werkzeug hergestellt werden.

Alternativ zur Coextrusion kann die äußere Beschichtung jedoch auch als Flüssigkeit und / oder Pulver auf das Kernprofil aufgetragen und danach zu einer Lackschicht ausgehärtet werden. Dies hat den Vorteil, dass für die Auftragung der Beschichtung kein Extruder erforderlich ist. Insbesondere können mittels dieses Verfahrens auch dünnflüssige Beschichtungsmaterialien aufgetragen werden. Im Rahmen der Erfindung liegt es auch, dass die Beschichtung als Folie auf das Kernprofil aufkaschiert wird. Eine Lackierung bzw. Folienkaschierung ist insbesondere dann vorteilhaft, wenn die Thermoplast-Matrix des Kernprofils als PA-, PET(nicht schlagzäh)- oder PBT-Matrix ausgebildet wird, um hier eine große Haftkraft der Beschichtung auf dem Kernprofil sicherzustellen. Als Material für die Lackschicht kommen insbesondere auf Polyurethanharz, Polyesterharz oder Epoxidharz basierende Lacke infrage. Sofern die Beschichtung als Folie aufkaschiert wird, kann diese z.B. Fluorpolymer und/oder Aluminium enthalten bzw. aus Fluorpolymer und/oder Aluminium bestehen. Bei einer Beschichtung in Form einer Lackierung oder Folie beträgt die Schichtdicke der Beschichtung zweckmäßigerweise maximal 1 mm, z.B. maximal 0,5 mm.

Insgesamt sind hinsichtlich des Materials des Kernprofils und der Beschaffenheit der Beschichtung insbesondere die folgenden Kombinationen vorteilhaft:

| Kernprofil | Beschichtung |
|---|---|
| Acrylat, z.B. PMMA | PVC, SAN, ASA oder Acrylat, z.B. PMMA |
| PA, z.B. PA6 | PA, Nasslack, Pulverlack oder Folie |
| PET-G | PVC, SAN, ASA oder Acrylat, z.B. PMMA |
| PET (nicht schlagzäh) | PET, Nasslack, Pulverlack oder Folie |
| PBT | PBT, Nasslack, Pulverlack oder Folie |

Es kann auch zweckmäßig sein, das z.B. eine PA-Matrix (insbes. PA6-Matrix) aufweisende Kernprofil zunächst mit der Beschichtung aus z.B. PA (insbesondere. PA6) zu versehen, beispielsweise zu coextrudieren, und daran anschließend die Beschichtung außenseitig mit einer zweiten Beschichtung, z.B. in Form eines Nass- oder Pulverlacks bzw. einer Kaschierfolie, zu versehen. Dies hat den Vorteil, dass eine ggf. erwünschte Oberflächenglättung bereits durch die erste Beschichtung sichergestellt ist und somit die z.B. für die Farbgestaltung wesentliche zweite Beschichtung sehr dünn ausgebildet werden kann. So kann z.B. die Ausbildung der zweiten Beschichtung als kaschierte Aluminiumfolie vorteilhaft sein.

Erfindungsgemäß werden dem Material der Beschichtung vor dem Auftrag auf das Kernprofil Farbpigmente zugesetzt. Die Farbpigmente können beim erfindungsgemäß hergestellten Betonbauteil-Bewehrungselement beispielsweise zur Kennzeichnung dienen, z.B. der Performance und/oder der geeigneten Einsatzgebiete des Bewehrungselementes. Farbpigmente im Sinne der Erfindung umfassen auch Weißpigmente, die dafür sorgen, dass das Strangprofil die "Farbe" Weiß erhält, z.B. durch den Einsatz des Weißpigmentes Titandioxid. Häufig besteht jedoch auch der Bedarf an farbigen, z.B. roten, grünen, blauen oder schwarzen Profilen. Sofern die Aufbringung der Beschichtung durch die vorbeschriebene Aufkaschierung einer Folie erfolgt, ist diese entsprechend eingefärbt.

Das Strangprofil kann an seiner äußeren Oberfläche mindestens ein Funktionselement aufweisen. Im Rahmen der Erfindung liegt es hierbei insbesondere, dass das Strangprofil mit einer Oberflächenprägung versehen wird, insbesondere periodisch entlang des Strangprofils. Diese Oberflächenprägung kann auf der vorstehend genannten, vorzugsweise vorgesehenen Beschichtung des Kernprofils erfolgen. Insbesondere kann die Oberflächenprägung mehrere, vorzugsweise parallel nebeneinander verlaufende Rillen aufweisen. Die Rillen verlaufen zweckmäßigerweise schräg, z.B. unter einem Winkel von 20 - 70°, vorzugsweise 30 - 60° zur Strangrichtung. Durch die Oberflächenprägung wird dem Strangprofil eine Oberflächenstruktur verliehen, die beispielsweise beim Eingießen des Profils in Beton zu einer besseren Benetzung der Profiloberfläche mit dem Betonmaterial führt. Dies erhöht die Anbindung des Profils an das Betonmaterial und führt damit einer Verbesserung der Armierungswirkung. Sofern die Oberflächenprägung auf einer Beschichtung des Kernprofils erfolgen soll, kann diese lediglich bereichsweise auf das Kernprofil aufgetragen sein, z.B. streifenförmig. Der mindestens eine Streifen kann insbesondere in Achsrichtung des Strangprofils verlaufen, oder aber auch z.B. dieses helixförmig umwickeln. Insbesondere in diesem Zusammenhang liegt es daher im Rahmen der Erfindung, dass die Beschichtung lediglich 5 - 50 %, insbesondere 10 - 30 % der Oberfläche des Kernprofils bedeckt.

Gemäß einer besonderen Ausführungsform der Erfindung wird dem Strangproduktionsprozess mindestens ein, vorzugsweise endloser Metallkern kontinuierlich zugeführt, der vom Kernprofil, vorzugsweise vollständig, umschlossen wird. In diesem Fall können die Vorteile einer Stahlbetonarmierung mit derjenigen einer thermoplastisch faserverstärkten Armierung kombiniert werden. So besitzt der Metallkern einen sehr hohen E-Modul, der im Rahmen dieser Ausführungsform mit der sehr hohen Zugefestigkeit der faserverstärkten Kunststoff-Matrix kombiniert wird. Durch das Umschließen des Metallkerns von der Kunststoff-Matrix schützt diese ferner den Metallkern zusätzlich gegen Korrosion und schirmt ggf. diesen auch hinsichtlich seiner magnetischen Eigenschaften nach außen hin ab. Zweckmäßigerweise weist der Metallkern einen kreisförmigen Querschnitt auf. Insbesondere kann es von Vorteil sein, wenn der Metallkern konzentrisch zum umhüllenden, insbesondere kreisringförmigen, Kernprofil ausgebildet ist. Der Metallkern besteht zweckmäßigerweise aus Stahl, vorzugsweise Edelstahl. Ferner beträgt die Querschnittsfläche des Metallkerns zweckmäßigerweise 10 - 40 % der gesamten Querschnittsfläche des stabförmigen Profils.

Im Rahmen der Erfindung liegt es ferner, dass das Kernrpofil mit mindestens einer zusätzlichen Wickel-Armierung helixförmig umwickelt ist. Zweckmäßigerweise enthält diese Wickel-Armierung, vorzugsweise endlose, Armierungsfasern. Diese Armierungsfasern können von einer Kunststoff-Umhüllung umhüllt sein, wobei die Kunststoff-Umhüllung zweckmäßigerweise ebenfalls aus einem thermoplastischen Kunststoff besteht, also beispielsweise aus ABS, PA, PMMA, PC, PET, PE, PP, PS, PEEK oder PVC. Die Kunststoff-Umhüllung dient zum Schutz der Armierungsfasern und gewährleistet eine glatte, homogene Oberfläche der der Wickel-Armierung. Die Armierungsfasern können aus Glas und/oder Kohlenstoff und/oder Basalt und/oder Naturfasern (z.B. Bambus, Flachs) und/oder Kunststoff, z.B. Aramid bestehen oder als Hybridfasern enthaltend eine Kombination mindestens zwei der vorgenannten Materialien ausgebildet sein, also z.B. Glas / Kunststoff, Kohlenstoff / Kunststoff, Naturfasern / Kunststoff oder dergleichen. Insbesondere können die Armierungsfasern in Armierungs-Rovings zusammen gefasst sein, wobei vorzugsweise hybride Armierungs-Rovings mit Armierungsfasern aus mindestens zwei unterschiedlichen Materialien, verwendet werden. Sofern Kunststofffasern als Armierungsfasern eingesetzt werden, können diese generell ebenfalls thermoplastische Eigenschaften aufweisen, also beispielsweise aus ABS, PA, PMMA, PC, PET, PE, PP, PS, PEEK oder PVC bestehen. Zweckmäßigerweise ist die helixförmige Umwicklung in einer von der äußeren Oberfläche des Kernprofils gebildeten Nut eingebettet. Diese Nut kann beispielsweise beim Fertigungsprozess unmittelbar durch das Aufwickeln der zusätzlichen Armierung auf die noch nicht ausgehärtete Oberfläche des Kernprofils oder aber auch durch einen separaten Verfahrensschritt durch eine Einwalzen der Nut in die noch nicht ausgehärtete Oberfläche der Kernprofils erzeugt werden.

Ein besonderer Vorteil der erfindungsgemäßen Lehre besteht insbesondere darin, dass das so erhaltene Strangprofil vor seinem Einsatz, z.B. vor seiner Einbindung in Betonmaterial umgeformt, insbesondere winkelförmig gebogen werden kann, z.B. in einem rechten Winkel. Für diesen Umformvorgang muss aufgrund der thermoplastischen Eigenschaften des stabförmigen Profils dieses lediglich bis zum Erreichen des schmelzflüssigen Zustand der Kunststoff-Matrix erwärmt werden, da die Verstärkungsfasern ohnehin flexibel sind. So kann z.B. das fertig hergestellte Strangprofil, zweckmäßigerweise nach einer stangenförmigen Ablängung, vor seinem Eingießen in Betonmaterial zu einem U-förmigen Bügel umgeformt werden. Es lassen sich also im Rahmen der erfindungsgemäßen Lehre insbesondere nach Herstellung des entsprechenden Strangprofils und vor dessen Einbindung in das Betonmaterial noch Veränderungen an der Geometrie des Profils vornehmen, um dieses an seinen speziellen Einsatzzweck anzupassen.

Im Folgenden wird die Erfindung anhand einer lediglich ein Ausführungsbeispiel darstellenden Zeichnung ausführlich erläutert. Es zeigen schematisch:
- Fig. 1: ein erfindungsgemäßes Verfahren zur Herstellung eines Strangprofils;
- Fig. 2: ein alternatives erfindungsgemäßes Herstellungsverfahren;
- Fig. 3: ein erfindungsgemäß hergestelltes Strangprofil in Form eines Betonbauteil-Bewehrungselementes in einer Längsansicht,
- Fig. 3a: das Strangprofil gemäß Fig. 3 in einer Querschnittsdarstellung,
- Fig. 3b: eine weitere Ausführungsform der Erfindung in einer der Fig. 3a entsprechenden Darstellung,
- Fig. 4: ein nicht erfindungsgemäß hergestelltes Betonbauteil-Bewehrungselement in einer Längsansicht;
- Fig. 5: das Betonbauteil-Bewehrungselement gemäß Fig. 4 in einer dreidimensionalen Darstellung;
- Fig. 5a: einen vergrößerter Ausschnitt aus der Fig. 5;
- Fig. 6: einen Querschnitt durch das in den Fig. 4 und 5 dargestellte Betonbauteil-Bewehrungselement;
- Fig. 7: eine weitere alternative Ausführungsform der Erfindung in einer der Fig. 6 entsprechenden Darstellung;
- Fig.8a-c: weitere Darstellungen des Ausführungsbeispiels gemäß Fig. 4 - 6;
- Fig. 9: ein nicht erfindungsgemäßes Verfahren zur Herstellung des Betonbauteil-Bewehrungselementes gemäß Fig. 4 bis 6 und
- Fig. 10: ein erfindungsgemäß hergestelltes Betonbauteil-Bewehrungselement nach seiner Umformung in einen U-förmigen Bügel

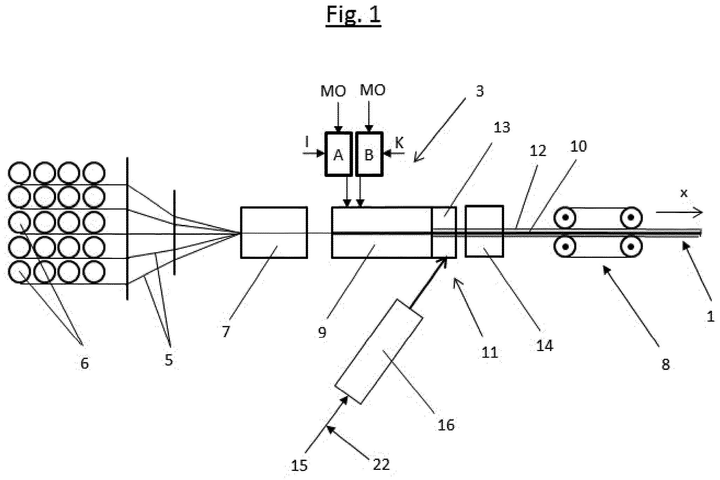

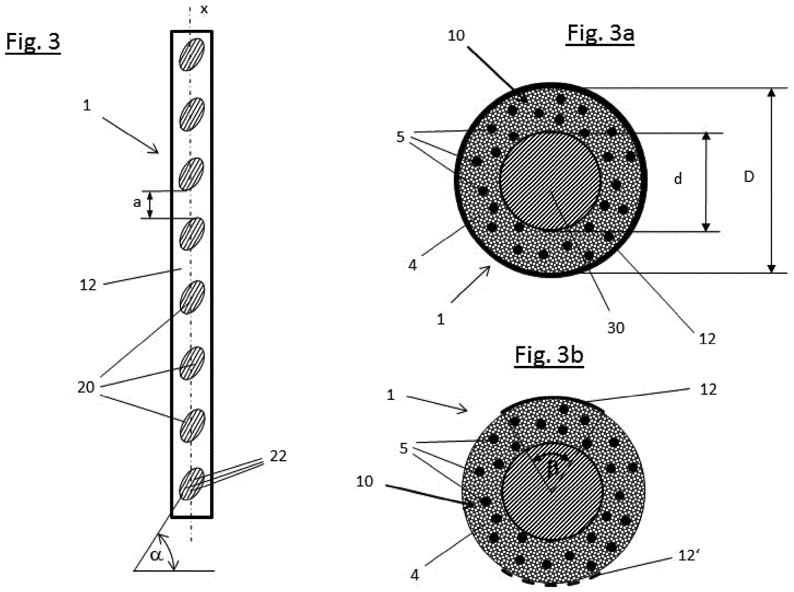

Die Fig. 1 zeigt ein erfindungsgemäßes Verfahren zur Herstellung eines thermoplastischen Strangprofils 1. Das Strangprofil 1 wird mithilfe eines Strangproduktionsprozesses 3 hergestellt. Während dieses Strangproduktionsprozesses 3 werden in die thermoplastische Matrix 4 des Strangprofils 1 endlose Verstärkungsglasfasern 5 integriert, die zunächst von Rollen 6 abgezogen und in einer Vorwärmstation 7 vorgewärmt werden. Erfindungsgemäß ist der Strangproduktionsprozess 3 als reaktive Pultrusion ausgebildet. Hierbei wird mittels eines Ziehwerkzeugs 8 das frisch hergestellte Strangprofil 1 über die endlosen Verstärkungsfasern 5 in Produktionsrichtung x aus dem beheizten Pultrusionswerkzeug 9 herausgezogen. Die reaktive Pultrusion 3 dient zur Herstellung eines endlos faserverstärkten thermoplastischen Kernprofils 10 (s.a. Fig. 3, 3a) des Strangprofils 1. Hierbei wird die thermoplastische Matrix 4 dieses Kernprofils 10 aus dünnflüssigen Monomeren und/oder reaktiven Oligomeren - beide mit MO bezeichnet - hergestellt, die während der reaktiven Pultrusion 3 zum Thermoplast polymerisiert werden. Neben den Monomeren und/oder reaktvien Oligomeren MO werden der reaktiven Pultrusion 3 zur Führung der darin stattfindenden chemischen Reaktion Initiatoren I und Katalysatoren K zugesetzt. Im Ausführungsbeispiel werden zur Polymerisation des Thermoplasts die mit MO bezeichneten Monomere bzw. Oligomere in zwei Komponenten A und B der reaktiven Pultrusion zugeführt. Die Komponente A enthält Mono-/Oligomere MO sowie Initiatoren I, während die Komponente B neben den Mono-/Oligomeren MO Katalysatoren K enthält. Damit wird sichergestellt, dass erst im Pultrusionswerkzeug 9 ein Reaktionsgemisch enthaltend Mono-/Oligomere MO sowie Initiatoren I und Katalysatoren K vorliegt und somit die Polymerisation auch erst im Pultrusionswerkzeug 9 gestartet wird. Auch über die Beheizung des Pultrusionswerkzeugs 9 kann die Polymerisationsgeschwindigkeit gesteuert werden. Im Ausführungsbeispiel ist die thermoplastische Matrix 4 als PA-Matix, insbesondere PA6-Matrix ausgebildet. Das mit der reaktiven Pultrusion 3 hergestellte Kernprofil 10 wird im Wege einer Coextrusion 11 mit einer äußeren Beschichtung 12, z.B. aus unverstärktem PA, versehen. Beim Ausführungsbeispiel gemäß Fig. 1 findet die Coextrusion 11 unmittelbar im Anschluss an reaktive Pultrusion 3 ohne Zwischenkühlung statt. Hierbei ist das Coextrusionswerkzeug 13 unmittelbar hinter dem Austritt des Werkzeuges 9 für die reaktive Pultrusion 3 angeordnet und ummantelt das Kernprofil 10 online. Erst danach erfolgt die Abkühlung des coextrudierten Strangprofils 1 in einer Abkühlvorrichtung 14, z.B. einem Wasserbad. Alternativ hierzu können die reaktive Pultrusion 3 und die Coextrusion 11 auch in einem gemeinsamen Werkzeug durchgeführt werden.

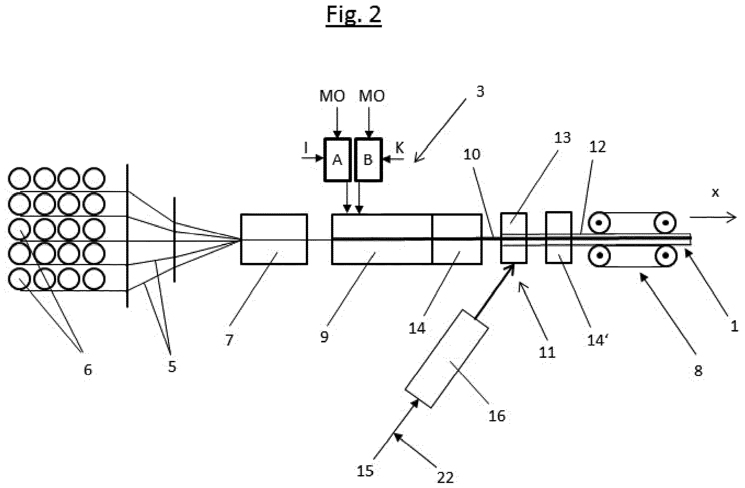

Beim Ausführungsbeispiel gemäß Fig. 2 hingegen erfolgt vor der ebenfalls online erfolgenden Coextrusion 11 der Beschichtung 12 zunächst in einer Abkühlvorrichtung 14 eine Zwischenkühlung des Kernprofils 10. Dies ist insbesondere bei der Coextrusion einer vergleichsweise dicken Beschichtung 12 aufgrund des großen Wärmeeintrags von Vorteil, um das Kernprofil 10 vor der Coextrusion 11 zu stabilisieren. Die thermoplastische Matrix 4 des Kernprofils 10 wird wiederum als PA-Matrix ausgebildet. Die coextrudierte Beschichtung 12 besteht ebenfalls aus PA-Material 15, welches einem für die Coextrusion 11 vorgesehenen Extruder 16 zugeführt wird, und damit aus einem auf dem Kernprofil 10 sehr gut haftenden Polymer 15. Das Material 15 der Beschichtung 12 entspricht also im Ausführungsbeispiel dem Material der thermoplastischen Matrix 4 des Kernprofils 10. Nach der Coextrusion 11 der Beschichtung 12 wird das Strangprofil 1 in einer weiteren Abkühlvorrichtung 14' (z.B. einem Wasserbad) final abgekühlt und kalibriert. Ferner ist optional zwischen der ersten Abkühlvorrichtung 14 und der Coextrusion 11 eine weiteres Ziehwerkzeug vorgesehen (nicht dargestellt).

Die Fig. 3 und 3a zeigen ein erfindungsgemäß hergestelltes thermoplastisches Strangprofil 1, welches beispielsweise mit den in Fig. 1 oder 2 beschriebenen Verfahren produziert werden kann. Das Strangprofil 1 ist als Betonbauteil-Bewehrungselement ausgebildet. Der vergrößerte Querschnitt durch das Strangprofil 1 in Fig. 3a zeigt die in die thermoplastische Matrix 4 des Kernprofils 10 eingebetteten Verstärkungsfasern 5 sowie die äußere Beschichtung 12 aus dem Beschichtungsmaterial 15. Der Gewichtsanteil der Verstärkungsfasern 5 im Kernprofil 10 beträgt im Ausführungsbeispiel mehr als 80 %. Die äußere Oberfläche des Kernprofils 10 ist von der Beschichtung 12 vollständig umschlossen. Anhand einer vergleichenden Betrachtung der Figuren 3 und 3a ist erkennbar, dass die Beschichtung 12 periodisch entlang des Strangprofils 1 mit einer Oberflächenprägung 20 versehen ist, z.B. mit einem Randabstand a in Strangrichtung x von beispielsweise mindestens 1 cm. Hierbei weist die Oberflächenprägung 20 mehrere parallel nebeneinander verlaufende Rillen 22, die unter einem Winkel α schräg zur Strangrichtung (x) verlaufen. Dieser Winkel α kann beispielsweise 40 - 70° betragen. Durch die Oberflächenprägungen 20 wird beim Eingießen die Anbindung des Bewehrungselementes 1 an das Betonmaterial verbessert.

Anhand der Fig. 3a ist ferner erkennbar, dass das Strangprofil 1 zusätzlich einen Metallkern 50 (in den Verfahren gemäß Fig. 1, 2 nicht dargestellt) aufweist, der vom Kernprofil 10 vollständig umschlossen ist. Sowohl der Metallkern 50 als auch das Strangprofil 1 weisen jeweils einen kreisförmigen Querschnitt auf, wobei der Metallkern 50 konzentrisch zum den Metallkern 50 umschließenden, ringförmigen Kernprofil 10 angeordnet ist. Der Metallkern 50 besteht im Ausführungsbeispiel aus Edelstahl. Der Durchmesser d des Metallkerns beträgt im Ausführungsbeispiel die Hälfte des Strangprofildurchmessers D, so dass entsprechend die Querschnittsfläche des Metallkerns 30 25 % der gesamten Querschnittsfläche des Strangprofils 1 beträgt. Das in Fig. 3, 3a dargestellte Strangprofile1 ist durch den Zusatz von (nicht dargestellten) Farbpigmenten zum Material 15 der Beschichtung 12 vor dem Auftrag auf das Kernprofil 10 entsprechend eingefärbt. Neben dem Einsatz von z.B. Ruß für eine schwarze Einfärbung können auch Farbpigmente verwendet werden, die z.B. zu einer roten, grünen, blauen, grauen oder gelben Einfärbung des Strangprofils 1 führen. In den Ausführungsbeispielen nicht dargestellt, jedoch im Rahmen der Erfindung ebenfalls möglich ist es, dass die äußere Beschichtung 12 als Flüssigkeit und / oder Pulver auf das Kernprofil 10 aufgetragen und danach zu einer Lackschicht ausgehärtet wird.

Während in Fig. 3a die Beschichtung 12 vollflächig auf des Kernprofil 10 aufgetragen ist, also das Kernprofil 10 vollständig bedeckt, ist in Fig. 3b die Beschichtung 12 lediglich bereichsweise auf das Kernprofil 10 aufgetragen. Die Beschichtung 12 ist hier streifenförmig in Richtung der Längsachse x des Strangprofils 1 ausgerichtet (eine Alternative ist eine helixförmige Bedeckung des Kernprofils 10 durch die streifenförmige Beschichtung 12) und bedeckt hierbei das Kernprofil 10 mit einem Bedeckungswinkel β von z.B. 20 - 180 °, z.B. 50 - 130°. Durch die gestrichtelte Linie 12' in Fig. 3b ist angedeutet, dass die Beschichtung auch in Form mehrerer (z.B. zwei), insbesondere gleichmäßig, umfangsseitig voneinander beabstandeten Streifen 12, 12' aufgetragen sein kann, wobei auch hier für jeden Streifen die genannten Bedeckungswinkel β geeignet sein können. Zweckmäßigerweise ist in diesem Fall die Oberflächenprägung 20 auf allen Streifen 12, 12' aufgetragen.

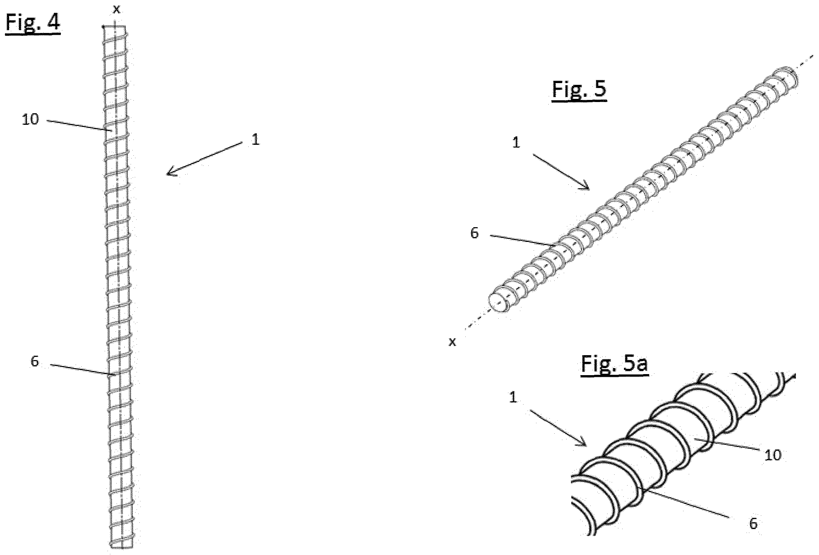

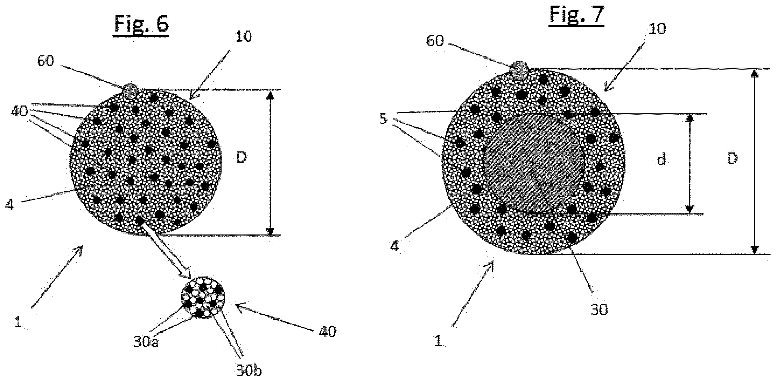

Die Fig. 4 bis 6 zeigen ein nicht erfindungsgemäß hergestelltes Betonbauteil-Bewehrungselement 1. Dieses enthält wiederum eine thermoplastische Matrix 4 sowie in die Matrix 4 integrierte, in Stabrichtung x ausgerichtete endlose Verstärkungsfasern 5 zur Armierung der Kunststoff-Matrix 4. Verstärkungsfasern 30a, 30b und thermoplastische Matrix 4 bilden gemeinsam das Kernprofil 10. In diesem Zusammenhang wird auf den vergrößerten Ausschnitt in der Fig. 3 verwiesen. Zur Armierung der thermoplastischen Matrix 4 werden die Verstärkungsfasern 30a, 30b enthaltene Hybridrovings 40 verwendet, welche als Verstärkungsfasern neben Glasfasern 30a auch Kunststofffasern 30b enthalten. Die Kunststofffasern 30b weisen ebenfalls thermoplastische Eigenschaften auf. Wie der Fig. 6 zu entnehmen ist, ist der Querschnitt des Strangprofils 1 wiederum kreisförmig ausgebildet und besitzt beispielsweise einen Durchmesser D von 8 bis 20 mm. Entsprechend beträgt die Querschnittsfläche des Stangprofils 1 hier mindestens 0,3 cm² und höchstens 5 cm². Die thermoplastische Matrix 4 besteht im Ausführungsbeispiel aus einem im Wege der reaktiven Pultrusion hergestellten Polyamid (PA).

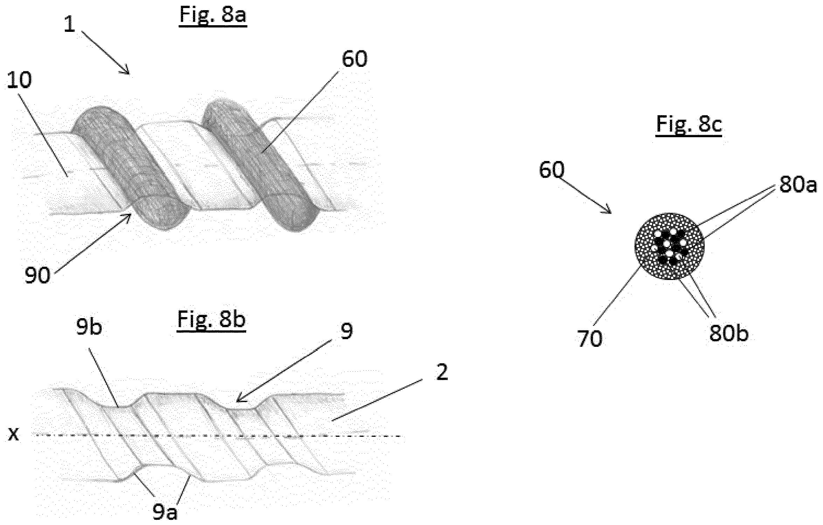

Wie insbesondere der vergrößerten Seitenansicht des Profils 1 gemäß Figur 8a zu entnehmen ist, ist das Kernprofil 10 mit einer zusätzlichen Wickel-Armierung 60 helixförmig umwickelt. Diese Wickel-Armierung 60 weist eine thermoplastische Kunststoff-Umhüllung 70 sowie von der Kunststoff-Umhüllung 70 eingeschlossene endlose Armierungsfasern 80a, 80b auf (s. Querschnitt durch die Wickel-Armierung 60 gemäß Fig. 8c). Die Armierungsfasern bestehen im Ausführungsbeispiel ebenfalls aus Glasfasern 80a sowie Kunststofffasern 80b. Die Armierungsfasern 80a, 80b sind in mehreren hybriden Armierungs-Rovings zusammengefasst (nicht näher dargestellt). In der Seitenansicht gemäß Fig. 8a ist erkennbar, dass die zusätzliche Wickel-Armierung 60 innerhalb einer von der äußeren Oberfläche des Kernprofils 10 gebildeten Nut 90 verläuft. Die Fig. 8b zeigt die aufgrund der Nut 90 profilierte äußere Oberfläche des Kernprofils 10 ohne Wickelarmierung 60. Die Nut 90 weist zwei schräg zur Strangrichtung x ausgerichtete Nutflanken 90a sowie einen parallel zur Strangrichtung x ausgerichteten Nutgrund 90b auf.

Beim nicht erfindungsgemäßen Ausführungsbeispiel gemäß Fig. 7 weist das Profil 1 wiederum zusätzlich einen Metallkern 50 auf, der von der thermoplastischen Matrix 4 vollständig umschlossen ist. Auch hier weisen sowohl der Metallkern 50 als auch das Profil 1 insgesamt einen kreisförmigen Querschnitt auf, wobei der Metallkern 50 wiederum konzentrisch zur den Metallkern 50 umschließenden, ringförmigen Kunststoff-Matrix 4 angeordnet ist.

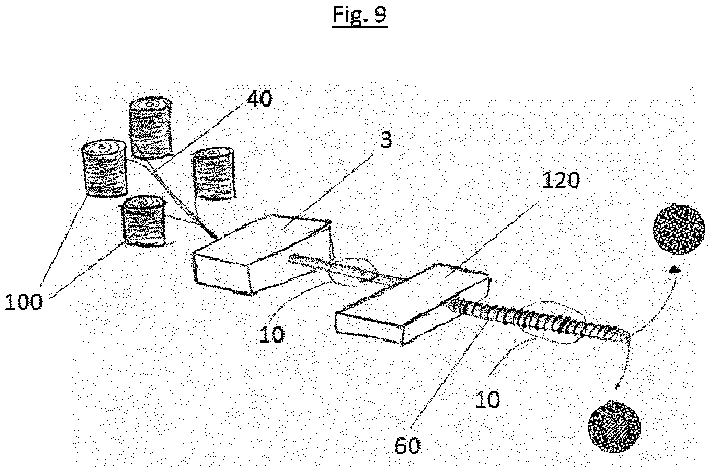

Fig. 9 zeigt ein Verfahren zur Herstellung des in den Fig. 4 bis 8 dargestellten, nicht erfindungsgemäßen Betonbauteil-Bewehrungselements 1. Es ist zu erkennen, dass in einem ersten Verfahrensschritt von mehreren Rollen 100 einzelne, jeweils Glas- und Kunststofffasern 30a, 30b enthaltende Hybridrovings 40 abgewickelt werden, welche sodann in den gegenüber den Fig. 1, 2 vereinfacht dargestellten Strangproduktionsprozess 3 einlaufen, der wiederum als reaktive Pultrusion ausgebildet ist. Die Hybridrovings 40 können vor der reaktiven Pultrusion im Bedarfsfall vorgewärmt werden, z.B. mittels eines IR-Strahlers (nicht dargestellt). Die Hybridrovings 40 werden im Strangproduktionsprozess 3 von der thermoplastischen Matrix 4 ummantelt, welche das Kernprofil 10 bildet. In einer daran anschließenden Vorrichtung 120 erfolgt das Profilieren der Oberfläche des Kernprofils 10, bei dem die Nut 90 gemäß Fig. 8a, 8b erzeugt wird (z.B. durch einen separaten Verfahrensschritt mittels eines Einwalzens der Nut 90 in die noch nicht ausgehärtete Oberfläche des Kernprofils 10), sowie das helixförmige Umwickeln dieser Oberfläche im Bereich der Profilierung (z.B. im Bereich des Nutgrundes 90b) mittels der zusätzlichen Wickel-Armierung 60. Rechts in der Fig. 9 ist angedeutet, dass sowohl die Variante ohne Metallkern (Fig. 6) als auch die Variante mit Metallkern 50 (Fig. 7) mittels des beschriebenen Herstellungsverfahrens erzeugt werden kann, wobei bei letzterem entsprechend auch der Metallkern 50 in die reaktive Pultrusion 3 einläuft (nicht näher dargestellt).

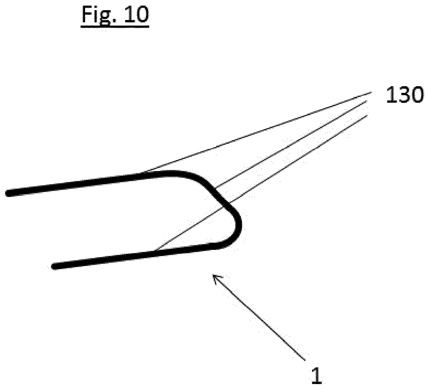

Fig. 10 zeigt ein erfindungsgemäß hergestelltes Betonbauteil-Bewehrungselement (z.B. wie in den Fig. 1 bis 3b dargestellt) in Form eines stabförmigen Strangprofils 1 vor seiner Einbindung in Betonmaterial. Es ist erkennbar, dass das Strangprofil 1 nach seiner Herstellung mehrfach winkelförmig gebogen wurde, so dass es einen U-förmigen Bügel mit drei Schenkein 130 bildet. Hierdurch wird das Profil 1 vor dem Eingießen in das Betonmaterial an seinen konkreten Einsatzzweck zur Armierung des entsprechenden Betonbauteils angepasst.

## Patentansprüche

1. Verfahren zur Herstellung eines thermoplastischen Strangprofils (1) in Gestalt eines Betonbauteil-Bewehrungselementes mit einer Querschnittsfläche von maximal 20 cm², vorzugsweise maximal 10 cm²
- wobei das Strangprofil (1) mit Hilfe eines Strangproduktionsprozesses (3) hergestellt wird, und
- wobei während des Strangproduktionsprozesses (3) in die thermoplastische Matrix (4) des Strangprofils (1) endlose Verstärkungsfasern (5, 30a, 30b) integriert werden,
**dadurch gekennzeichnet, dass** der Strangproduktionsprozess (3) als reaktive Pultrusion ausgebildet ist, die zur Herstellung eines endlos faserverstärkten, thermoplastischen Kernprofils (10) des Strangprofils (1) dient, und dass das Kernprofil (10) mit einer äußeren Beschichtung (12, 12') versehen wird, wobei dem Material der Beschichtung (12, 12') vor dem Auftrag auf das Kernprofil (10) Farbpigmente zugesetzt werden.

2. Verfahren nach Anspruch 1, **dadurch gekennzeichnet, dass** die thermoplastische Matrix (4) des Kernprofils (10) aus dünnflüssigen Monomeren (MO) und/oder reaktiven Oligomeren (MO) hergestellt wird, die während der reaktiven Pultrusion (3) zum Thermoplast polymerisiert werden.

3. Verfahren nach Anspruch 1 oder 2, **dadurch gekennzeichnet, dass** die thermoplastische Matrix (4) des Kernprofils (10) als Polyamid-Matrix, Polyacrylat-Matrix oder Polyester-Matrix ausgebildet wird.

4. Verfahren nach einem der Ansprüche 1 - 3, **dadurch gekennzeichnet, dass** die Beschichtung (12, 12') mindestens 70 % oder maximal 50 % der äußeren Oberfläche des Kernprofils (10) bedeckt.

5. Verfahren nach einem der Ansprüche 1 bis 4, **dadurch gekennzeichnet, dass** die Beschichtung (12, 12') aus einem auf dem Kernprofil (10) haftenden Polymer (15) hergestellt wird, welches vorzugsweise dem Material der thermoplastischen Matrix (4) des Kernprofils (10) entspricht.

6. Verfahren nach Anspruch 5, **dadurch gekennzeichnet, dass** die äußere Beschichtung (12) mit dem Kernprofil (10) coextrudiert wird.

7. Verfahren nach einem der Ansprüche 1 bis 4, **dadurch gekennzeichnet, dass** die äußere Beschichtung (12, 12') als Flüssigkeit und/oder Pulver auf das Kernprofil (10) aufgetragen und danach zu einer Lackschicht ausgehärtet oder als Folie auf das Kernprofil (10) aufkaschiert wird.

8. Verfahren nach einem der Ansprüche 1 bis 7, **dadurch gekennzeichnet, dass** die Beschichtung (12, 12'), vorzugsweise periodisch entlang des Strangprofils (1), mit einer Oberflächenprägung (20) versehen wird.

9. Verfahren nach Anspruch 8, **dadurch gekennzeichnet, dass** die Oberflächenprägung (20) mehrere, vorzugsweise parallel nebeneinander verlaufende Rillen (22) aufweist, wobei vorzugsweise die Rillen (22) schräg zur Strangrichtung (x) verlaufen.

10. Verfahren nach einem der Ansprüche 1 bis 9, **dadurch gekennzeichnet, dass** dem Strangproduktionsprozess (3) mindestens ein, vorzugsweise endloser, Metallkern (50) kontinuierlich zugeführt wird, der vom Kernprofil (10), vorzugsweise vollständig, umschlossen wird.

11. Verfahren nach einem der Ansprüche 1 bis 10, **dadurch gekennzeichnet, dass** das Kernprofil (10) mit mindestens einer zusätzlichen Wickel-Armierung (60) helixförmig umwickelt wird.

12. Verfahren nach einem der Ansprüche 1 bis 11, **dadurch gekennzeichnet, dass** das Strangprofil (1) während oder nach der reaktiven Pultrusion (3) umgeformt, vorzugsweise winkelförmig gebogen wird.

## Claims

1. Method for producing a thermoplastic extruded profile (1) in the form of a concrete component reinforcing element having a cross-sectional area of not more than 20 cm², preferably not more than 10 cm²,
- wherein the extruded profile (1) is produced by means of an extrusion production process (3), and
- wherein endless reinforcing fibres (5, 30a, 30b) are integrated into the thermoplastic matrix (4) of the extruded profile (1) during the extrusion production process (3),
**characterised in that** the extrusion production process (3) is in the form of a reactive pultrusion which serves to produce an endlessly fibre-reinforced, thermoplastic core profile (10) of the extruded profile (1), and **in that** the core profile (10) is provided with an outer coating (12, 12'), wherein pigments are added to the material of the coating (12, 12') before it is applied to the core profile (10).

2. Method according to claim 1, **characterised in that** the thermoplastic matrix (4) of the core profile (10) is produced from low-viscosity monomers (MO) and/or reactive oligomers (MO), which are polymerised during the reactive pultrusion (3) to form the thermoplastic.

3. Method according to claim 1 or 2, **characterised in that** the thermoplastic matrix (4) of the core profile (10) is in the form of a polyamide matrix, polyacrylate matrix or polyester matrix.

4. Method according to any one of claims 1 to 3, **characterised in that** the coating (12, 12') covers at least 70% or not more than 50% of the outer surface of the core profile (10).

5. Method according to any one of claims 1 to 4, **characterised in that** the coating (12, 12') is produced from a polymer (15) adhering to the core profile (10), which polymer preferably corresponds to the material of the thermoplastic matrix (4).

6. Method according to claim 5, **characterised in that** the outer coating (12) is coextruded with the core profile (10).

7. Method according to any one of claims 1 to 4, **characterised in that** the outer coating (12, 12') is applied to the core profile (10) in the form of a liquid and/or powder and is subsequently cured to form a lacquer layer or is laminated onto the core profile (10) in the form of a film.

8. Method according to any one of claims 1 to 7, **characterised in that** the coating (12, 12'), preferably periodically along the extruded profile (1), is provided with a surface embossment (20).

9. Method according to claim 8, **characterised in that** the surface embossment (20) has a plurality of grooves (22), wherein the grooves (22) preferably run obliquely to the extrusion direction (x).

10. Method according to any one of claims 1 to 9, **characterised in that** there is continuously supplied to the extrusion production process (3) at least one, preferably endless, metal core (50) which is enclosed, preferably completely, by the core profile (10).

11. Method according to any one of claims 1 to 10, **characterised in that** at least one additional wound reinforcement (60) is helically wound around the core profile (10).

12. Method according to any one of claims 1 to 11, **characterised in that** the extruded profile (1) is shaped, preferably bent at an angle, during or after the reactive pultrusion (3).

## Revendications

1. Procédé de fabrication d'un profilé extrudé (1) thermoplastique sous la forme d'un élément d'armature d'élément en béton, doté d'une aire de section transversale de 20 cm² maximum, de préférence de 10 cm² maximum,
- le profilé extrudé (1) étant fabriqué à l'aide d'un processus de production par extrusion (3) et
- des fibres de renforcement (5, 30a, 30b) continues étant intégrées dans la matrice (4) thermoplastique du profilé extrudé (1) pendant le processus de production par extrusion (3),
**caractérisé en ce que** le processus de production par extrusion (3) est réalisé sous la forme d'une pultrusion réactive, qui sert à fabriquer un profilé central (10) thermoplastique, renforcé en continu par des fibres, du profilé extrudé (1) et **en ce que** le profilé central (10) est pourvu d'un revêtement (12, 12') extérieur, des pigments de couleur étant ajoutés au matériau du revêtement (12, 12') avant l'application sur le profilé central (10).

2. Procédé selon la revendication 1, **caractérisé en ce que** la matrice (4) thermoplastique du profilé central (10) est fabriquée en monomères (MO) fluides et/ou en oligomères (MO) réactifs, qui sont polymérisés pendant la pultrusion réactive (3) pour former la matière thermoplastique.

3. Procédé selon la revendication 1 ou 2, **caractérisé en ce que** la matrice (4) thermoplastique du profilé central (10) est réalisée sous la forme d'une matrice en polyamide, d'une matrice en polyacrylate ou d'une matrice en polyester.

4. Procédé selon l'une des revendications 1 à 3, **caractérisé en ce que** le revêtement (12, 12') recouvre au moins 70 % ou au maximum 50 % de la surface extérieure du profilé central (10).

5. Procédé selon l'une des revendications 1 à 4, **caractérisé en ce que** le revêtement (12, 12') est fabriqué en un polymère (15) adhérant sur le profilé central (10), qui correspond de préférence au matériau de la matrice (4) thermoplastique du profilé central (10).

6. Procédé selon la revendication 5, **caractérisé en ce que** le revêtement (12) extérieur est coextrudé avec le profilé central (10).

7. Procédé selon l'une des revendications 1 à 4, **caractérisé en ce que** le revêtement (12, 12') extérieur est appliqué sous la forme de liquide et/ou de poudre sur le profilé central (10) et ensuite durci pour former une couche de peinture ou est contrecollé sous la forme de film sur le profilé central (10).

8. Procédé selon l'une des revendications 1 à 7, **caractérisé en ce que** le revêtement (12, 12') est pourvu, de préférence périodiquement le long du profilé extrudé (1), d'une texture de surface (20).

9. Procédé selon la revendication 8, **caractérisé en ce que** la texture de surface (20) présente plusieurs stries (22) s'étendant de préférence parallèlement les unes à côté des autres, les stries (22) s'étendant de préférence de manière oblique par rapport à la direction d'extrusion (x).

10. Procédé selon l'une des revendications 1 à 9, **caractérisé en ce qu'**au moins une âme métallique (50), de préférence continue, est introduite en continu dans le processus de production par extrusion (3), ladite âme métallique étant, de préférence entièrement, entourée par le profilé central (10).

11. Procédé selon l'une des revendications 1 à 10, **caractérisé en ce que** le profilé central (10) est enveloppé de manière hélicoïdale par au moins une armature enroulée (60) supplémentaire.

12. Procédé selon l'une des revendications 1 à 11, **caractérisé en ce que** la forme du profilé extrudé (1) est modifiée, celui-ci étant de préférence courbé de façon à former un angle, pendant ou après la pultrusion réactive (3).
